# EUROPEAN PATENT SPECIFICATION

(11) **EP 2 410 177 B1**
(45) Date of publication and mention of the grant of the patent: **08.07.2015**
(21) Application number: 10753153.5
(22) Date of filing: 18.03.2010
(51) Int. Cl.: F03G 6/06, F24J 2/07, F24J 2/10, F01K 3/00, F24J 2/04, F01K 3/18, F22B 1/00

(54) **AIR- AND STEAM-TECHNOLOGY COMBINED SOLAR PLANT**
SOLARANLAGE MIT KOMBINATION AUS LUFT- UND DAMPFTECHNOLOGIE
INSTALLATION SOLAIRE COMBINÉE À TECHNOLOGIE AIR-VAPEUR

(30) Priority: 20.03.2009 ES 200900764
(43) Date of publication of application: 25.01.2012
(73) Proprietor: Abengoa Solar New Technologies, S.A., 41018 Sevilla (ES)
(72) Inventor: NAVIO GILABERTE, Raúl, E-41018 Sevilla (ES); SERRANO GALLAR, Lucía, E-41018 Sevilla (ES); LLORENTE FOLCH, Paula, E-41018 Sevilla (ES); MARTINEZ SANZ, Noelia, E-41018 Sevilla (ES); ALVAREZ DE MIGUEL, Sandra, E-41018 Sevilla (ES); ASENSIO PEREZ-ULLIVARRI, Javier, E-41018 Sevilla (ES)
(74) Representative: Garcia-Cabrerizo y del Santo, Pedro Maria
(86) International application number: PCT/ES2010/000110
(87) International publication number: WO 2010/106205

(56) References cited:
- EP-A1- 1 519 108
- WO-A1-2008/153922
- DE-A1- 2 945 969
- ES-A1- 2 222 838
- ES-A1- 2 222 838
- JP-A- S60 122 865
- US-A- 4 394 859
- US-A- 4 421 102
- US-A1- 2008 302 314
- RHEINLAENDER J ET AL: "GUD-KRAFTWERK MIT INTEGRIERTEM SOLARSYSTEM", BWK BRENNSTOFF WARME KRAFT, SPRINGER VDI VERLAG, DUSSELDORF, DE, vol. 53, no. 6, 1 June 2001 (2001-06-01), pages 55-58, XP001065946, ISSN: 1618-193X

## Description

### TECHNICAL FIELD OF THE INVENTION

The present invention relates to an air and steam technology combined solar plant with application in the fields of electricity production, process heat and solar fuels, as well as thermo-chemical processes, which aims to combine the technologies of air solar receptor and saturated-steam solar receptor for the production of superheated steam.

### BACKGROUND OF THE INVENTION

The technology inside which the invention is framed and which is the object of this patent is the technology of tower thermoelectric solar power plants, in which a field of heliostats (large mirrors, 40-125 m2 per unit) equipped with a tracking of the solar position at all times (elevation and azimuth), guide the reflected rays to a light placed on top of a tower.

Direct solar energy is concentrated in a receptor at the top of a tower. These receptors have a heat transfer fluid that is heated from the concentrated solar energy.

Later this or any other fluid heated from the above passes through a turbine, for electricity production.

There are a variety of receptor types that fulfil the mission of collecting the concentrated solar energy and transmitting it to a heat transfer fluid, but they all still have a number of drawbacks.

Next we will refer to three types of receptors depending on the type of heat transfer fluid employed: saturated-steam solar receptors, superheated steam solar receptors and air solar receptors.

The generally tubular saturated-steam solar receptors heat the water that passes by the receptor occurring in them the phase change and obtaining steam at certain temperature. These receptors, however, reach as maximum steam temperatures of 330° C, for which the yield of the turbine can be considered low.

As a solution to this, the use of superheated steam solar receptors was raised, the use of which allows the implementation of more efficient thermodynamic cycles in plants. However, these receptors have a great technological difficulty due to the stringent conditions of temperature at which the receptor is operated.

The walls of the tubes of the superheated steam solar receptor are subjected to thermal cycling continuously between room temperature, the temperature of the steam that feeds this receptor (250 to 310° C) and the required temperature on the wall for the generation of superheated steam at 540° C, close to 600° C, this coupled with the lack of controllability of the system especially in the event of transients, (passing clouds etc.) and poor thermal properties of the superheated steam, causes that the receptor materials are exposed to significant stress, suffer greater stress and fatigue and resulting in cracking due to large temperature differences in different parts of the receptor.

On the other hand there is the problem of working at high pressure, requiring larger tube wall thicknesses, that when transferring high power densities to the heat transfer fluid necessarily imply high thermal gradients.

Thus the difficulties that are found currently in the superheated steam systems are mainly linked to the resistance of materials due to solar input conditions.

Another type of receptors that are found is air receptors with or without pressurization.

These receptors are generally volumetric receptors that are specifically designed to optimize heat exchange with air as thermal fluid, the illuminated absorber constituting the receptor being a matrix or porous medium (wire mesh or ceramic monolith), through which the cooling gas flows.

These receptors can work at an outlet temperature between 700° C and 850° C for metal absorbers and more than 1,000° C with ceramic absorbers but with thermal efficiencies lower than those of tubular receptors (70-80%).

Pressurized air receptors use air heated by solar radiation and then injected into a gas turbine at a certain pressure.

In these receptors we are again on the condition of working at very high pressures, with the difficulties of control that this implies in a solar power plant, which also has not a constant heat input.

EP1519108 discloses a process for making superheated steam comprising a superheater to superheat steam generated in a separate vaporizer. Preferably the units are independent and in separate systems and solar power is used. EP1519108 discloses a steam-producing step for a power station and a power station, especially a solar power station having steam turbines.

ES2222838 discloses a solar receiver having a heliostat field directing solar radiation onto a receiver mounted on a tower and provided with an absorber field, with a large number of absorber elements and an edge absorber around the outside of the absorber field, with a number of absorber modules. Air flows around each of the absorber elements of the absorber field perpendicular to its front face, the front wall of the edge absorber limited by a fluid flow channel.

It is also important to consider that in a solar receptor, the incident flux distribution, even in quasi-stationary state is not uniform over the surface of the receptor. In addition, the incident flux has discontinuities due to the variation of cloud passage, called transients. These two factors give us a real idea of the thermal-structural stresses which a solar receptor has to undergo.

So far the receptors described above have been considered independently in electric production solar plants or constituting a single receptor. The combination of both receptors independently located on towers housed in one or several cavities would be a huge advantage with the intention of solving the various technical problems posed above.

The invention presented below tries to bring together the advantages of using superheated steam on solar power plants, solving the existing risks, achieving greater control of the plant and thereby increasing the stability and durability of said plant.

### DESCRIPTION OF THE INVENTION

This invention is proposed as an alternative to existing technologies that use a single receptor to generate superheated steam by using solar energy input.

There are included improvements to existing technologies because the main object (obtaining superheated steam at certain conditions to power a turbine), is reached by carrying out a stepwise process occurring in solar components physically independent, which is why the technological advantages provided by each one of them can be used. The implementation of a system as the one described herein, will allow obtaining greater efficiency in the overall electricity production process.

The invention, as defined in independent claim 1, consists of the production of high efficiency superheated steam by combining three basic components: not pressurized air solar receptor, saturated-steam solar receptor and a heat exchanger. The system also has a boiler where the phase separation of the water-steam mixture from the saturated steam receptor takes place.

In this combined air and saturated-steam receptor system, both receptors are physically separated, therefore each receptor can be placed in one single cavity or different cavities of the tower, which can lead to the establishment of independent strategies of pointing the heliostat field. The pointing strategy of the heliostats consists of an adaptive dynamic control of the field according to the requirements of heat flux density of each receptor, thereby maintaining stable temperature conditions of entry of fluids to the exchanger. Thus, part of the heliostat field is focused on the saturated steam receptor and another part on the air receptor, allowing greater control of the plant and promoting the stability of operation of the same.

In the proposed system, overheating of the saturated steam (from the boiler) takes place in a heat exchanger, which is not exposed to concentrated solar input, and in which the transfer fluid is not pressurized air at high temperature from a solar receptor at atmospheric pressure. Thus, the increase of the temperature of steam is obtained as a result of energy transfer between the fluids from the two receptors in the exchanger.

The foregoing implies a huge advantage for the proposed system against superheated steam receptors, as now the exchanger can have easily controlled input and output conditions, which may stabilize the stage of overheating.

Similarly, when performing the steam overheating of the receptors in an exchanger which is not exposed to the concentrated solar input, reducing the instability of doing it in a superheated steam receptor is achieved. This will prevent the problems caused by the stringent conditions of temperature to which the receptor is subjected, and which cause problems of resistance of materials (high stresses, extreme mechanical and thermal fatigue conditions) causing the appearance of cracks in its structure.

There is a possibility that the air leaving the exchanger at a temperature above 80° C is used for pre-heating the water recirculated to the boiler and that will be distributed later to the saturated steam receptor.

Another advantage of the proposed system is the fact of working with non-pressurized air receptors that have a great simplicity of operation and allow preventing the problems caused by the use of pressurized air in unstable incident solar radiation conditions. On the other hand, the steam input is carried out by saturated-steam solar receptors, which technology has no technological risks.

The separation of the evaporation and overheating phases also allows having a greater margin of maneuver when implementing thermal storage systems in the circuit, by using saturated steam or superheated steam, thereby guaranteeing the operation of the plant at those moments of the day when there are transients (clouds, etc..) or solar input is not available.

Therefore, the combined use of these two types of receptors (non-pressurized air receptor and saturated steam receptor) in a solar plant for the production of superheated steam from a heat exchanger is a huge advantage in order to improve the overall system efficiency, the stability of the different stages of the process and the durability of the components in the solar plant.

In summary, the improvements and advantages of this invention compared to existing technologies for central tower solar receptors are:
▪ Combined use of saturated steam receptor and air receptor technology, for obtaining fluids at optimum conditions that allow overheating of steam in an independent heat exchanger, which facilitates control of the solar plant and favours its continued normal operation and stability. These components are physically separated for greater efficiency in the different stages of the process and allow greater control over it.
▪ Overheating is carried out in a heat exchanger independent from the solar receptors, which will attenuate the difficulties carried by superheated steam solar receptors, making the process to be carried out in a more efficient and controlled manner.
▪ Due to the physical independence of both receptors, these can be placed in the same cavity (without forming a single receptor) or in different cavities of the tower, in this case being able to carry out a certain pointing strategy of the field according to the requirements of each receptor.
▪ The process allows raising the possibility of developing and implementing thermal storage systems with greater margin for maneuver by using saturated steam or superheated steam.
▪ Reduction of thermal stresses to which the materials of the receptors are subjected when using an external heat exchanger for overheating, favouring the durability of the plant.

### Description of the drawings

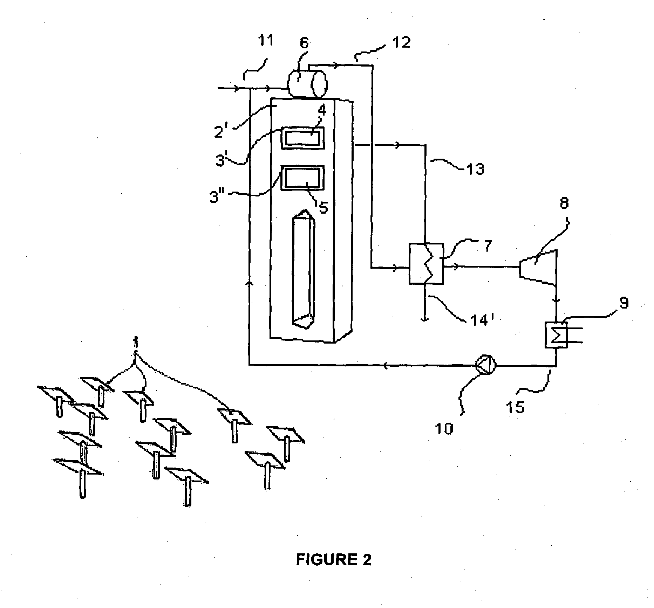

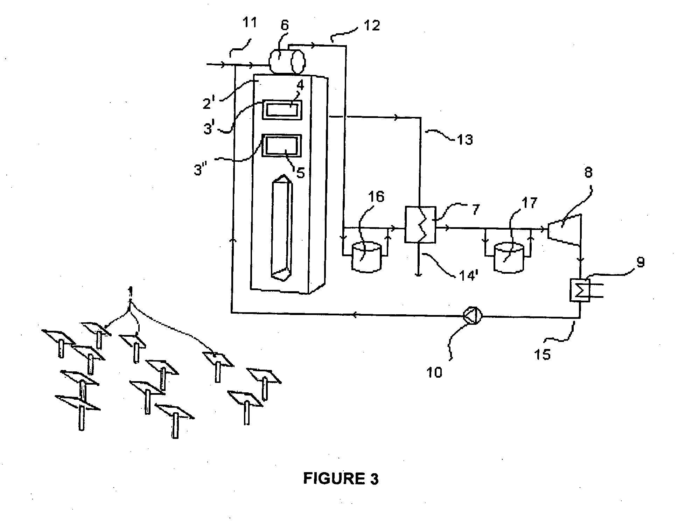

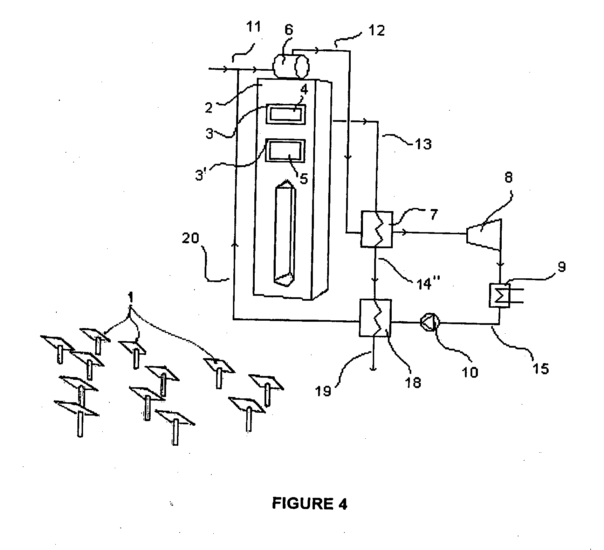

To complement the description being made and in order to help to a better understanding of the characteristics of the invention, as an integral part of said description, is attached a set of drawings wherein by way of illustration and not limitation, the following has been represented (according to a preferred embodiment of the same):

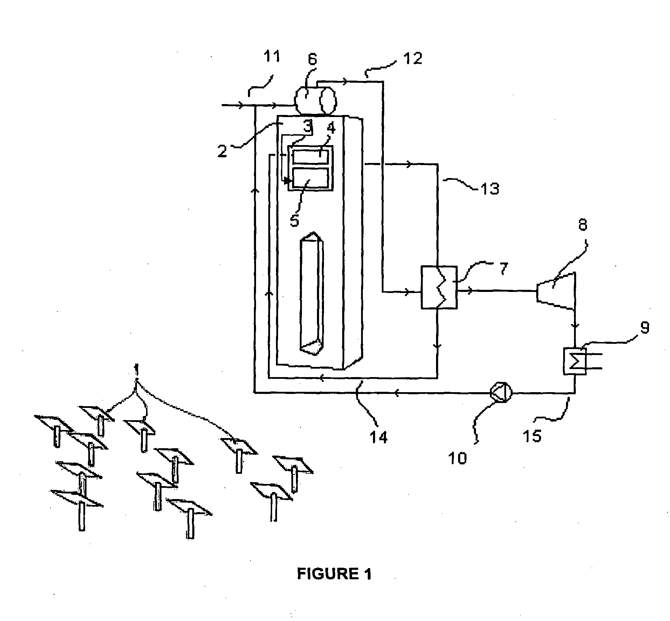

Figure 1. Single cavity tower central technology solar plant with a combination of saturated steam receptor and air receptor, where the references correspond to the following components:
   1. Heliostat field: A set of large mirrors (40-120 m2) that concentrate direct solar radiation on top of the receptor.
   2. Single cavity tower.
   3. Cavity, the purpose of which is to house the receptors of different technologies
   4. Non-pressurized air receptor: in said receptor air temperature is raised by providing solar energy.
   5. Saturated steam receptor: receptor over which solar energy is focused in order to produce saturated steam.
   6. Boiler
   7. Heat exchanger: A device for heat exchange between the hot air input and superheated steam.
   8. Turbine
   9. Capacitor
   10. Pump
   11. Current of water supply to the boiler which is then sent to the saturated steam receptor
   12. Saturated steam obtained in the saturated steam receptor
   13. Hot air from the non-pressurized air receptor
   14. Cooler air recirculated to the non-pressurized air receptor
   15. Recovered and condensed water from the turbine recirculated to the boiler for subsequent bypassing to the saturated steam receptor
Figure 2. Two cavities tower central technology solar plant with a combination of saturated steam receptor and air receptor, where the references that differ from Figure 1 represent:
   2'. Two cavities tower
   3', 3". Cavities
   14'. Cooler air exiting the exchanger
Figure 3. Two cavities tower central technology solar plant, with a combination of saturated steam receptor and air receptor, with thermal storage systems, where the new references represent:
   16. Thermal storage system for saturated steam
   17. Thermal storage system for superheated steam
Figure 4. Two cavities tower central technology solar plant, with a combination of saturated steam receptor and air receptor with economizer, where the new components correspond to the references:
   14". Cooler air exiting the exchanger for water preheating
   18. Economizer
   19. Low temperature air
   20. Preheated water for boiler supply

### Preferred embodiment of the invention

The thermoelectric solar plant object of our invention consists of an optimal height tower (2, 2') and a field of heliostats (1) (large mirrors 40-120 m2), together with the auxiliaries needed for the operation of this.

The tower has two cavities located at the top of the tower (3', 3"), one for housing a saturated-steam solar receptor (5) and another one for a non-pressurized air solar receptor (4). For the solar energy input to the two receptors occurs in the most efficient manner it is proposed to carry out a series of pointing strategies of heliostats so that part of the heliostat field to the saturated-steam solar receptor and part to the superheated steam receptor, i.e., it is proposed the use of concentrated radiation by a percentage of the heliostat field for the evaporation stage, and the use of the rest of the field for the concentration of radiation intended for the non-pressurized air receptor.

The supply water (11) enters cold in the boiler (6) and from there it circulates to the saturated-steam solar receptor (5) where part of the liquid water turns into steam. The water-steam mixture, rises again to the boiler (6) where the phase separation takes place. Saturated steam (12) leaves the boiler at a temperature between 260-350° C, said temperature will be given by the pressure of the steam system.

Air (13) from the non-pressurized solar receptor (4) installed in the first cavity of the tower (3') and heated by solar radiation concentration is introduced into a heat exchanger (7). In it, heat exchange occurs between the air at high temperature (13) and saturated steam (12) from the boiler (6) of the saturated-steam solar receptor installed in a second cavity (3") of the tower. The temperature of the superheated steam will be that required by the steam turbine (8), usually 540° C. Therefore, the design of the air receptor will have an area and a focus of a number of heliostats proportional to the power required by the turbine (8).

The heat exchanger (7) is situated next to the tower (2') to facilitate its maintenance and reduce costs associated with its installation.

After the air-steam exchanger, there is an output of superheated steam to turbine and an output of air still at high temperature (14, 14', 14") that can be used as an economizer (18) or system for pre-heating water from the turbine (15), as a system of hot air for entry to the air receptor or in the case of large-scale major power plants as reheater of the steam at the output of a high pressure turbine which will subsequently feed a medium pressure turbine.

Our thermoelectric solar plant can also have a storage system (16) in steam or molten salts, which allows us to store the steam generated in the solar receptor in order to use it overnight in the absence of solar input or during transients.

## Claims

1. Air- and steam-technology combined solar plant, wherein heat transfer fluid is water/steam and air comprising:
a) a heliostat field (1);
b) a saturated-steam receptor (5) as evaporating means;
c) a non-pressurised air solar receptor (4) ;
d) overheating means comprising an air-steam heat exchanger (7) ;
e) a boiler (6) connecting the evaporating means and the overheating means;
f) control means for an adaptive dynamic control of the heliostat field (1) according to heat flux density of each receptor (4, 5), thereby maintaining stable temperature conditions of entry of fluids to the air-steam heat exchanger (7):
f1) focusing part of the heliostat field (1) on the saturated steam receptor (5);
f2) focusing another part of the heliostat field (1) on the air solar receptor (4);
wherein:
g) the overheating means is out of reach of an input of solar energy concentrated by the heliostat field (1).

2. Air- and steam-technology combined solar plant according to claim 1, wherein the saturated steam receptor (5) is tubular.

3. Air- and steam-technology combined solar plant according to claim 1, wherein the non-pressurized air solar receptor (4) and the saturated steam receptor (5) are located in the same cavity.

4. Air- and steam-technology combined solar plant according to claim 1, wherein the non-pressurized air solar receptor (4) and the saturated steam receptor (5) are located in different cavities.

5. Air- and steam-technology combined solar plant according to claim 1 comprising a first economizer (18) for exchanging heat between air leaving the overheating means and water fed to the boiler (6) for preheating said water.

6. Air- and steam-technology combined solar plant according to claim 1 comprising a reheater for exchanging heat between air at an output of the overheating means and steam exiting from a high pressure turbine for heating said steam and subsequently supply said steam to a medium pressure turbine.

## Patentansprüche

1. Solaranlage mit kombinierter Luft- und Gastechnologie, bei welcher das Wärmeträgerfluid Wasser/Dampf und Luft ist, umfassend:
a) ein Heliostatenfeld (1);
b) einen Rezeptor für gesättigten Dampf (5) als Verdampfungsmittel;
c) einen Sonnenrezeptor druckloser Luft (4);
d) Überhitzungsmittel, umfassend einen Luft-Dampf-Wärmetauscher (7);
e) einen Kessel (6), der die Verdampfungs- und Überhitzungsmittel verbindet;
f) Steuerungsmittel für eine adaptive dynamische Steuerung des Heliostatenfelds (1) gemäß der Wärmestromdichte jedes Rezeptors (4, 5), sodass stabile Temperaturbedingungen beim Eintritt der Fluide in den Luft-Dampf-Wärmetauscher (7) aufrechterhalten werden:
f1) wobei ein Teil des Heliostatenfelds (1) auf den Rezeptor für gesättigten Dampf (5) fokussiert wird;
f2) wobei ein anderer Teil des Heliostatenfelds (1) auf den Luft-Sonnenrezeptor (4) fokussiert wird;
wobei:
g) das Überhitzungsmittel außerhalb der Reichweite einer Einspeisung von Sonnenenergie ist, die von dem Heliostatenfeld (1) konzentriert wird.

2. Solaranlage mit kombinierter Luft- und Gastechnologie nach Anspruch 1, bei welcher der Rezeptor für gesättigten Dampf (5) röhrenförmig ist.

3. Solaranlage mit kombinierter Luft- und Gastechnologie nach Anspruch 1, bei welcher der Sonnenrezeptor druckloser Luft (4) und der Rezeptor für gesättigten Dampf (5) sich in demselben Hohlraum befinden.

4. Solaranlage mit kombinierter Luft- und Gastechnologie nach Anspruch 1, bei welcher der Sonnenrezeptor druckloser Luft (4) und der Rezeptor für gesättigten Dampf (5) sich in unterschiedlichen Hohlräumen befinden.

5. Solaranlage mit kombinierter Luft- und Gastechnologie nach Anspruch 1, die einen ersten Vorwärmer (18) zum Austausch von Wärme zwischen der das Überhitzungsmittel verlassenden Luft und dem Wasser umfasst, das dem Kessel (6) zugeführt wird, um dieses Wasser vorzuwärmen.

6. Solaranlage mit kombinierter Luft- und Gastechnologie nach Anspruch 1, die einen Zwischenüberhitzer zum Austausch von Wärme zwischen der Luft an einem Auslass des Überhitzungsmittels und Dampf umfasst, der aus einer Hochdruckturbine austritt, um diesen Dampf zu erhitzen und anschließend an eine Mitteldruckturbine zu leiten.

## Revendications

1. Centrale solaire à technologie air et vapeur combinée, dans laquelle le fluide caloporteur est l'eau/la vapeur et l'air comprenant :
a) un champ d'héliostats (1) ;
b) un récepteur de vapeur saturée (5) en guise de moyen d'évaporation ;
c) un récepteur solaire d'air non pressurisé (4) ;
d) un moyen de surchauffe comprenant un échangeur de chaleur air-vapeur (7) ;
e) une chaudière (6) reliant le moyen d'évaporation et le moyen de surchauffe ;
f) un moyen de contrôle pour un contrôle dynamique adaptatif du champ d'héliostats (1) en fonction de la densité du flux de chaleur de chaque récepteur (4, 5), maintenant ainsi des conditions de température stables de l'entrée des fluides dans l'échangeur de chaleur air-vapeur (7) :
f1) concentrant une partie du champ d'héliostats (1) sur le récepteur de vapeur saturée (5) ;
f2) concentrant une autre partie du champ d'héliostats (1) sur le récepteur solaire d'air (4);
dans laquelle :
g) le moyen de surchauffe est hors d'atteinte d'une entrée d'énergie solaire concentrée par le champ d'héliostats (1).

2. Centrale solaire à technologie air et vapeur combinée selon la revendication 1, dans laquelle le récepteur de vapeur saturée (5) est tubulaire.

3. Centrale solaire à technologie air et vapeur combinée selon la revendication 1, dans laquelle le récepteur solaire d'air non pressurisé (4) et le récepteur de vapeur saturée (5) sont situés dans la même cavité.

4. Centrale solaire à technologie air et vapeur combinée selon la revendication 1, dans laquelle le récepteur solaire d'air non pressurisé (4) et le récepteur de vapeur saturée (5) sont situés dans des cavités différentes.

5. Centrale solaire à technologie air et vapeur combinée selon la revendication 1 comprenant un premier économiseur (18) pour l'échange de chaleur entre l'air quittant le moyen de surchauffe et l'eau alimentant la chaudière (6) pour le préchauffage de ladite eau.

6. Centrale solaire à technologie air et vapeur combinée selon la revendication 1 comprenant un réchauffeur pour l'échange de chaleur entre l'air à une sortie du moyen de surchauffe et la vapeur sortant d'une turbine haute pression pour le chauffage de ladite vapeur et ensuite la fourniture de ladite vapeur à une turbine moyenne pression.
